**Europäisches Patentamt**

**European Patent Office**

**Office européen des brevets**

(19)

(11) Veröffentlichungsnummer: **0 234 502**

**A2**

(12) # EUROPÄISCHE PATENTANMELDUNG

(21) Anmeldenummer: **87102329.7**

(22) Anmeldetag: **19.02.87**

(51) Int. Cl.⁴: **F16H 37/06 , F16H 3/24**

(30) Priorität: **21.02.86 DE 3605686**

(43) Veröffentlichungstag der Anmeldung:
**02.09.87 Patentblatt 87/36**

(84) Benannte Vertragsstaaten:
**AT BE CH DE ES FR GB GR IT LI LU NL SE**

(71) Anmelder: **Friedrich Deckel**
**Aktiengesellschaft**
**Plinganserstrasse 150**
**D-8000 München 70(DE)**

(72) Erfinder: **Zeh, Rainer, Dipl.-Ing.**
**Sämannstrasse 4**
**D-8032 Lochham(DE)**

(54) **Mehrstufiges Zahnradschaltgetriebe.**

(57) Ein mehrstufiges Zahnradschaltgetriebe weist zwei koaxiale, von einem Antriebsmotor (26) direkt angetriebene Antriebswellen (38, 44) auf. Jede dieser Antriebswellen kann über eine Kupplungseinrichtung (56) direkt mit einer koaxial zu den Antriebswellen liegenden Abtriebswelle (54) gekuppelt werden. Außerdem ist die äußere Antriebswelle (38) mit Zahnrädern (46, 48) versehen, die in an sich bekannter Weise über ein Vorgelege (58, 60, 62, 56) mit der Abtriebswelle antriebsverbindbar sind. Auf diese Weise lassen sich mit Drehzahlstufungen, die über das Verhältnis von etwa 3 zu 1 nicht hinausgehen, an der Abtriebswelle (54) Drehzahlen von etwa 200 bis 5.000 min⁻¹ erzeugen. Mit einer Drehzahlregelung des Antriebsmotors 26 im Bereich von etwa 3 zu 1 läßt sich ein Drehzahlbereich an der Abtriebswelle (54) von etwa 60 min⁻¹ bis etwa 5.000 min⁻¹ darstellen.

Fig.3

EP 0 234 502 A2

## Mehrstufiges Zahnradschaltgetriebe

Die Erfindung betrifft ein mehrstufiges Zahnradschaltgetriebe der im Oberbegriff des Anspruches 1 genannten Art.

Derartige Getriebe erlauben je nach Bauaufwand eine Abstufung der Motordrehzahl auf unterschiedliche Abtriebsdrehzahlen, wobei jeweils eine dieser Drehzahlen, vorzugsweise die Höchstdrehzahl, über Kupplungsmittel direkt von der Antriebswelle auf die Abtriebswelle übertragen wird, so daß eine Leistungsübertragung über Zahnräder mit den bekannten Problemen einer Geräusch-und Wärmeerzeugung und eines Zahnradspiels vermieden wird.

Bei einem bekannten Zahnradschaltgetriebe der gattungsgemäßen Art ist der Antriebsmotor über einen Zahnriemen mit der Antriebswelle verbunden; die Abtriebswelle liegt koaxial zu dieser Antriebswelle. Parallel zur Antriebswelle und zur Abtriebswelle liegt eine Vorgelegewelle, die einerseits über einen mehrere Zahnräder aufweisenden Schieberadblock mit auf der Abtriebswelle fest angeordneten Zahnrädern antriebsverbindbar ist und andererseits über ein fest auf der Vorgelegewelle angeordnetes Zahnrad in ständigem Eingriff mit einem fest auf der Antriebswelle befestigten Zahnrad steht. Über das Vorgelege können beispielsweise mit einem drei Zahnräder umfassenden Schieberadblock drei unterschiedliche Drehzahlen an der Abtriebswelle erzeugt werden; eine vierte Drehzahl ist über die direkte Kupplung der Abtriebswelle mit der Antriebswelle möglich, wobei dann selbstverständlich der Schieberadblock außer Eingriff bleibt. Es ergibt sich auf diese Weise ein vierstufiges Getriebe, mit einer direkten, d. h. ohne Zahnradübertragung erzeugten Drehzahl.

Ein derartiges Getriebe ist in den Möglichkeiten seiner konstruktiven Ausgestaltung beschränkt, da einerseits bei den über das Vorgelege erzeugten Drehzahlen in bekannter Weise nur relativ kleine Stufensprünge möglich sind, so daß der gesamte erzielbare Drehzahlbereich verhältnismäßig klein ist; andererseits ist nur eine einzige direkte Drehzahl mit den Vorteilen einer geringen Geräusch-und Wärmeentwicklung gegeben.

Es ist die Aufgabe der vorliegenden Erfindung, ein Zahnradschaltgetriebe der gattungsgemäßen Art zu schaffen, mit welchem ein wesentlich größerer Drehzahlbereich abgedeckt werden kann und bei welchem die Möglichkeit besteht, mehr als eine direkte Drehzahl zu verwenden, wobei das Getriebe gleichzeitig konstruktiv einfach und preiswert sein soll.

Diese Aufgabe ist erfindungsgemäß durch die im Kennzeichen des Anspruches 1 enthaltenen Merkmale gelöst.

Unmittelbar nach dem Antriebsmotor erfolgt eine erste Drehzahlverzweigung, d. h. die Motordrehzahl wird mit unterschiedlichen Übersetzungsverhältnissen auf zwei Antriebswellen übertragen. Es besteht dann die Möglichkeit, jede der beiden Antriebswellen z. B. direkt mit der Abtriebswelle zu kuppeln bzw. über das Vorgelege mit dieser zu verbinden, wobei sich vier unterschiedliche Drehzahlen ergeben, von denen zwei direkte Drehzahlen im Sinne der vorstehenden Definition sind. Es sind auch andere Varianten denkbar, bei denen beispielsweise das Vorgelege nur mit einer Abtriebswelle verbindbar ist, wobei über einen beispielsweise auf der Vorgelegewelle verschiebbar angeordneten, mit mehreren auf der Antriebswelle befestigten Zahnrädern in Eingriff bringbaren Schieberadblock mehrere unterschiedliche Drehzahlen an der Abtriebswelle erzeugt werden können.

Zwischen den Drehzahlen der beiden vom Antriebsmotor direkt angetriebenen Antriebswellen kann ohne große Schwierigkeiten ein großer Drehzahlsprung vorgesehen werden, so daß auf diese Weise ein großer Drehzahlbereich erschlossen wird; diese beiden Drehzahlen können dann durch im folgenden zu beschreibende Maßnahmen weiter verzweigt werden, um den gesamten Drehzahlbereich in der gewünschten Stufung abzudecken.

In bevorzugter Ausgestaltung der Erfindung ist vorgesehen, daß die erste Antriebswelle als Hohlwelle ausgebildet ist und die zweite Antriebswelle innerhalb der ersten koaxial gelagert ist. Dadurch ergeben sich neben eine kompakten Bauweise einige günstige konstruktive Ausgestaltungsmöglichkeiten. In einer Ausgestaltung der Erfindung ist vorgesehen, daß die zweite Antriebswelle eine gegenüber der ersten Antriebswelle höhere Drehzahl aufweist. Da die beiden Antriebswellen stets gleichzeitig und in der gleichen Drehrichtung umlaufen, ergibt sich dadurch der große Vorteil, daß sich die innere Antriebswelle nur mit der Drehzahldifferenz beider Wellen gegenüber der äußeren Antriebswelle dreht, so daß eine entsprechend geringere Lagerbelastung auftritt. Außerdem kommt diese Anordnung auch den Festigkeitserfordernissen beider Antriebswellen entgegen, da die innere, schneller drehende Antriebswelle ein geringeres Drehmoment zu übertragen hat und einen dementsprechend kleineren Wellenquerschnitt aufweisen muß als die äußere, langsamer drehende Antriebswelle.

Weitere vorteilhafte Ausgestaltungen der Erfindung ergeben sich aus den Unteransprüchen.

Ein Ausführungsbeispiel der Erfindung ist in der Zeichnung dargestellt und im folgenden näher beschrieben. Es zeigen:

Fig. 1 schematisch ein herkömmliches Zahnradschaltgetriebe mit einem Antriebsmotor, einer Antriebswelle, einer Vorgelegewelle sowie einer Abtriebswelle;

Fig. 2 in schematischer Darstellung ein Zahnradschaltgetriebe mit einem Antriebsmotor, zwei davon angetriebenen Antriebswellen, einer Vorgelegewelle und einer Abtriebswelle;

Fig. 3 ein Zahnradschaltgetriebe gemäß Fig. 2 in einer mehr ins einzelne gehenden Darstellung.

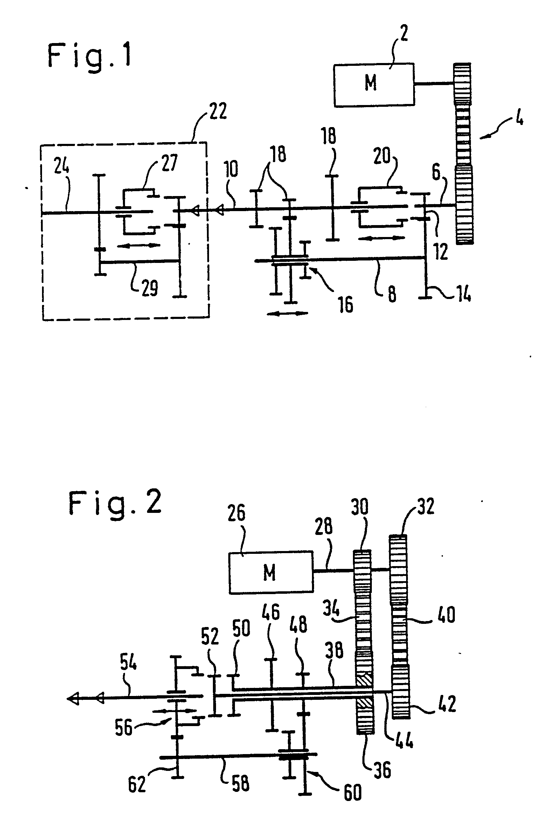

Fig. 1 zeigt eine bekannte, vielfach verwendete Getriebeanordnung mit einem Antriebsmotor 2, einer von diesem über einen Zahnriementrieb 4 angetriebenen Antriebswelle 6, einer Vorgelegewelle 8 und einer Abtriebswelle 10. Über den Zahnriementrieb 4 wird die Drehzahl des Motors 2 in eine geeignete Drehzahl für die Antriebswelle 6 übertragen. Auf dieser Antriebswelle 6 ist ein festes Stirnrad 12 angeordnet, welches mit einem fest auf der Vorgelegewelle 8 befestigten Stirnrad 14 ständig im Eingriff ist. Auf der Vorgelegewelle 8 ist außerdem ein auf dieser axial verschiebbarer, mit dieser drehfest verbundener Schieberadblock 16 mit drei Zahnrädern angeordnet. Dieser kann mit drei auf der Abtriebswelle 10 fest angeordneten Zahnrädern 18 in Eingriff gebracht werden. Die Drehzahl der mit der Antriebswelle 6 ständig antriebsverbundenen Vorgelegewelle 8 kann demnach über den Schieberadblock 16 und die Zahnräder 18 in drei unterschiedliche Abtriebsdrehzahlen umgewandelt werden.

Auf der Abtriebswelle 10 ist außerdem eine Kupplungseinrichtung 20 angeordnet. Diese ist als auf der Abtriebswelle 10 axial verschiebbare Klauenkupplung ausgebildet, die mit der Verzahnung des Stirnrades 12 in Eingriff gebracht werden kann. Über die Kupplungseinrichtung 20 und das Stirnrad 12 kann auf diese Weise eine direkte Verbindung von der Antriebwelle 6 zur Abtriebswelle 10 hergestellt werden, wobei selbstverständlich der Schieberadblock 16 außer Eingriff mit den Zahnrädern 18 sein muß.

Wie sich aus Fig. 1 erkennen läßt, ergibt sich für die Abtriebswelle 10 eine große Baulänge, da die Zahnräder 18 einen Abstand zueinander aufweisen müssen, der sicherstellt, daß beim Eingriff eines Zahnrades 18 mit dem Schieberadblock 16 die anderen Zahnräder außer Eingriff sind, und der außerdem eine Leerlaufstellung für den Schieberadblock 16 ermöglicht. Es sind deshalb auch - schon Zahnradschaltgetriebe verwirklicht worden, bei denen der Schieberadblock nur zwei Zahnräder umfaßt und der Abtriebswelle 10 eine Anordnung nachgeordnet ist, die in Fig. 1 in einem gestrichelten Kasten 22 dargestellt ist. Sie umfaßt eine weitere Abtriebswelle 24, die mit der Abtriebswelle 10 entweder über eine Kupplungseinrichtung 27 direkt gekuppelt oder über eine Vorgelegewelle 29 mit einer gewünschten Übersetzung antriebsverbunden werden kann, wie nicht näher ausgeführt zu werden braucht.

Fig. 2 zeigt ein mehrstufiges Zahnradschaltgetriebe mit einem Antriebsmotor 26, auf dessen Motorwelle 28 zwei Zahnriemenscheiben 30, 32 angeordnet sind. Die Zahnriemenscheibe 30 ist über einen Zahnriemen 34 und eine weitere Zahnriemenscheibe 36 mit einer ersten Antriebswelle 38 antriebs verbunden. Die Zahnriemenscheibe 32 ist über einen Zahnriemen 50 und eine Zahnriemenscheibe 42 mit einer zweiten, koaxial innerhalb der ersten gelagerten Antriebswelle 44 antriebsverbunden.

Auf der ersten Antriebswelle 38 sind zwei Zahnräder 46, 48 fest angeordnet; am freien Ende der Antriebswelle 38 ist eine Klauenverzahnung 50 ausgebildet. An dem über das Ende der ersten Antriebswelle 38 überstehenden Ende der zweiten Antriebswelle 44 ist ebenfalls eine Klauenverzahnung 52 ausgebildet.

Koaxial zu den Antriebswellen 38, 44 ist eine Abtriebswelle 54 angeordnet. Auf dieser ist eine Kupplungseinrichtung 56 axial verschiebbar aber drehfest angeordnet. Diese Kupplungseinrichtung 56 kann wahlweise mit der Klauenverzahnung 50 oder 52 gekuppelt werden, wodurch die Abtriebswelle 54 mit der ersten Antriebswelle 38 oder der zweiten Antriebswelle 44 direkt gekoppelt wird. Parallel zu den vorbeschriebenen Wellen ist eine Vorgelegewelle 58 angeordnet, auf der ein Schieberadblock 60 mit zwei Zahnrädern axial verschiebbar aber drehfest angeordnet ist. Dieser Schieberadblock 60 kann wahlweise mit dem Zahnrad 46 oder, wie in Fig. 2 dargestellt, mit dem Zahnrad 48 in Eingriff gebracht werden. Außerdem ist auf der Vorgelegewelle 58 ein Zahnrad 62 fest angeordnet, welches mit einer an der Außenseite der Kupplungseinrichtung 56 ausgebildeten Außenverzahnung in Eingriff gebracht werden kann.

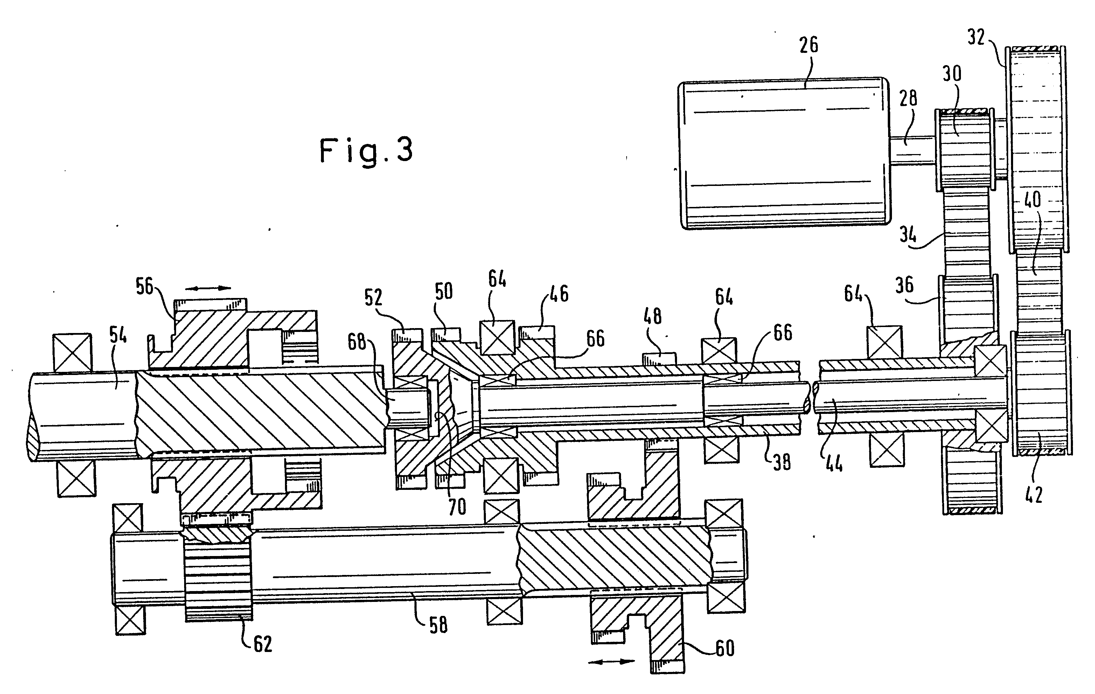

Die Anordnung gemäß Fig. 2 ist in Fig. 3 im einzelnen dargestellt. Dabei wurden für gleiche Teile gleiche Bezugszeichen verwendet. Die Funktionsweise des Zahnradschaltgetriebes gemäß den Fig. 2 und 3 ist folgende:

Der Antriebsmotor 26 habe eine übliche Höchstdrehzahl von 4.000 min⁻¹ diese Drehzahl wird mit einem Untersetzungsverhältnis von 3,5 auf die erste Antriebswelle 38 übertragen, die infolgedessen eine Drehzahl von 1.600 min⁻¹ hat. Die Antriebswelle wird mit einem Übersetzungsverhältnis von 1,25 angetrieben, so daß sie eine Drehzahl von 5.000 min⁻¹ aufweist. Die Lager 64 der Antriebswelle 38 sind demnach für eine Drehzahl von 4.000 min⁻¹, die Lager 66 der Antriebswelle 44 für eine Drehzahl von 5.000 - 1.600 = 3.400 min⁻¹ auszulegen, was technisch wenig problematisch ist. Das Übersetzungsverhältnis zwischen den Zahnrädern 38 und dem großen Zahnrad des Schieberadblockes 60 sei etwa 0,38, das Übersetzungsverhältnis zwischen dem Zahnrad 46 und dem kleinen Zahnrad des Schieberadblockes 60 sei etwa 1, das Übersetzungsverhältnis zwischen dem Zahnrad 62 und der Kupplungseinrichtung 56 etwa 0,33. Es läßt sich zeigen, daß auf diese Weise an der Abtriebswelle 54 Drehzahlen von 200 min⁻¹, 500 min⁻¹, 1.600 min⁻¹ und 5.000 min⁻¹ zur Verfügung stehen, wovon die beiden letteren Drehzahlen direkte Drehzahlen sind. Wenn die Drehzahl des Antriebsmotors 26 zusätzlich etwa im Verhältnis 3 zu 1 stufenlos regelbar ist, so kann ein gesamter Drehzahlbereich von etwa 60 min⁻¹ bis 5.000 min⁻¹ abgedeckt werden, wobei an keiner Stelle des Zahnradschaltgetriebes Stufensprünge von mehr als etwa 3 zu 1 erforderlich sind.

Dadurch daß die Kupplungseinrichtung 56 in einer ersten Stellung die Antriebsverbindung der Abtriebswelle 54 mit der Vorgelegewelle 58, in anderen Stellungen die direkte Kupplung mit den Antriebswellen 38 bzw. 44 herstellt, ist gewährleistet, daß jeweils nur eine dieser Verbindungen bestehen kann, so daß eine gesonderte Überwachung zur Vermeidung einer fehlerhaften Verbindung nicht erforderlich ist.

Der Schieberadblock 60 ist in allen Fällen, bei denen die Abtriebswelle 54 direkt mit einer der Antriebswellen 38 bzw. 44 gekuppelt ist, außer Eingriff mit den Gegenzahnrädern, so daß im Falle eines direkten Antriebes die Vorgelegewelle 58 nicht angetrieben wird, so daß jegliche Lärmerzeugung, die insbesondere bei ohne Belastung umlaufenden Zahnradpaarungen auftritt, vermieden wird.

Um eine fliegende Lagerung der Abtriebswelle 54 zu vermeiden, ist diese mit einem Lagerzapfen 68 versehen, welcher in einer am Abtriebsende der zweiten Antriebswelle 44 ausgebildeten Zapfenaufnahme 70 gelagert ist.

Es sei bemerkt, daß die angegebenen Übersetzungen nur beispielhaft genannt sind und daß andere Übersetzungen und damit andere Drehzahlbereiche denkbar sind.

## Ansprüche

1. Mehrstufiges Zahnradschaltgetriebe, umfassend eine mit einem Antriebsmotor verbundene Antriebswelle sowie eine mit dieser wahlweise über eine Vorgelegewelle und mehrere Schieberäder mit unterschiedlichen Übersetzungsverhältnissen antriebsverbindbare oder über eine Kupplungseinrichtung direkt kuppelbare Abtriebswelle, dadurch **gekennzeichnet**,
-daß wenigstens zwei voneinander unabhängige, mit unterschiedlichen Übersetzungsverhältnissen mit dem Antriebsmotor (26) verbundene Antriebswellen (38, 44) vorgesehen sind,
-daß die Vorgelegewelle (58) mit wenigstens einer der beiden Antriebswellen (38, 44) antriebsverbindbar und von dieser trennbar ist, und
-daß die Abtriebswelle (54) über die Kupplungseinrichtung (56) mit wenigstens einer der Antriebswellen (38, 44) direkt kuppelbar ist.

2. Zahnradschaltgetriebe nach Anspruch 1, **gekennzeichnet** durch eine als Hohlwelle ausgebildete erste Antriebswelle (38) und eine innerhalb der ersten Antriebswelle (38) koaxial gelagerte zweite Antriebswelle (44).

3. Zahnradschaltgetriebe nach Anspruch 2, dadurch **gekennzeichnet**, daß die zweite Antriebswelle (44) eine gegenüber der ersten Antriebswelle (38) höhere Drehzahl aufweist.

4. Zahnradschaltgetriebe nach Anspruch 2 oder 3, dadurch **gekennzeichnet**, daß die erste Antriebswelle (38) und/oder die zweite Antriebswelle (44) jeweils mit wenigstens einem mit dieser fest verbundenen Zahnrad (46, 48) versehen sind, welches mit einem auf der Vorgelegewelle (58) drehfest und axial verschiebbar angeordneten Schieberadblock (60) in Eingriff bringbar ist.

5. Zahnradschaltgetriebe nach einem der Ansprüche 2 bis 4, dadurch **gekennzeichnet**, daß auf der Abtriebswelle (54) ein mit dieser drehfest verbundener und axial verschiebbarer Schieberadblock (56) angeordnet ist, welcher wahlweise mit einem fest auf der Vorgelegewelle angeordneten Zahnrad (62) oder mit jeweils einem auf der ersten Antriebswelle (38) bzw. zweiten Antriebswelle (44) fest angeordneten Zahnrad (50 bzw. 52) in Eingriff bringbar ist.

6. Zahnradschaltgetriebe nach einem der Ansprüche 2 bis 5, dadurch **gekennzeichnet**, daß die zweite Antriebswelle (44) mit ihren beiden Enden jeweils über die Enden der ersten Antriebswelle (38) übersteht, daß die Antriebsenden der ersten Antriebswelle (38) und der zweiten Antriebswelle (44) jeweils über Antriebsmittel, vorzugsweise Treibriemen (34, 40) mit der Welle (28) des Antriebsmotors (26) verbunden sind.

7. Zahnradschaltgetriebe nach einem der Ansprüche 5 oder 6,
dadurch **gekennzeichnet**,
daß die Abtriebswelle (54) koaxial zu den Antriebswellen (38, 44) angeordnet ist und daß der Schieberadblock (56) der Abtriebswelle (54) etwa topfförmig ausgebildet ist, wobei an seiner Außenseite eine Außenverzahnung für den Eingriff mit dem festen Zahnrad (62) der Vorgelegewelle - (58), an seiner Innenseite eine Klauenverzahnung für den wahlweisen Eingriff mit einer jeweils an den Enden der Antriebswellen (38, 44) ausgebildeten äußeren Klauenverzahnung (50, 52) vorgesehen ist.

8. Zahnradschaltgetriebe nach Anspruch 7,
dadurch **gekennzeichnet**,
daß die Abtriebswelle (54) an ihrem den Antriebswellen (38, 44) zugewandten Ende einen Lagerzapfen (68) aufweist, welcher in einer am Abtriebsende der zweiten Antriebswelle (44) ausgebildeten Zapfenaufnahme (70) gelagert ist.

9. Zahnradschaltgetriebe nach einem der Ansprüche 4 bis 8,
dadurch **gekennzeichnet**,
daß der Schieberadblock (60) der Vorgelegewelle zwei Zahnräder umfaßt, welche wahlweise mit je einem von zwei mit der ersten Antriebswelle (38) fest verbundenen Zahnrädern (46, 48) in Eingriff bringbar sind.

Fig.1

Fig.2

# Fig.3

0 234 502